**Europäisches Patentamt**

**European Patent Office**

**Office européen des brevets**

(19)

(11) Veröffentlichungsnummer: **0 278 287 B1**

(12)

# EUROPÄISCHE PATENTSCHRIFT

(45) Veröffentlichungstag der Patentschrift:
29.08.90

(21) Anmeldenummer: **88100909.6**

(22) Anmeldetag: **22.01.88**

(51) Int. Cl.⁵: **B01J 8/38**
// C10J3/54, C10J3/56,
F23C11/02

(54) Verfahren und Einrichtung zur Behandlung von körnigen Feststoffen in einer Wirbelschicht.

(30) Priorität: **31.01.87 DE 3702892**

(43) Veröffentlichungstag der Anmeldung:
**17.08.88 Patentblatt 88/33**

(45) Bekanntmachung des Hinweises auf die Patenterteilung:
**29.08.90 Patentblatt 90/35**

(84) Benannte Vertragsstaaten:
**BE DE ES FR GB GR NL SE**

(56) Entgegenhaltungen:
**EP-A- 0 161 970**
**WO-A-86/03986**
**DE-A- 3 124 832**

(73) Patentinhaber: **RHEINBRAUN Aktiengesellschaft,
Stüttgenweg 2, D-5000 Köln 41(DE)**

(72) Erfinder: **Molerus, Otto Oskar, Prof. Dr.-Ing.,
Lärchenstrasse 7, D-8551 Hemhofen(DE)**
Erfinder: **Wirth, Karl-Ernst, Dr.-Ing., Kainsbacher
Strasse 20, D-8569 Happurg(DE)**

(74) Vertreter: **Koepsell, Helmut, Dipl.-Ing., Mittelstrasse 7,
D-5000 Köln 1(DE)**

**Beschreibung**

Die Erfindung betrifft ein Verfahren und eine Einrichtung zur Behandlung von körnigen Feststoffen in einer Wirbelschicht gemäß dem Oberbegriff des Anspruches 1 bzw. des Anspruches 8.

Die Lehre gemäß der Erfindung ist anwendbar sowohl bei der physikalischen und chemischen Umwandlung von Feststoffen, insbesondere zur Erzeugung von Gas aus kohlenstoffhaltigen Feststoffen, als auch bei der Verbrennung von solchen Feststoffen. Die Erzeugung von Gas erfolgt beispielsweise in einem Hoch-Temperatur-Winkler-Vergaser, in welchem derartige Feststoffe, z. B. Braunkohle, unter Anwendung von exotherm und endotherm wirkenden gasförmigen Vergasungsmedien umgesetzt werden. Bei der Verbrennung wird feinkörniger, kohlenstoffhaltiger Feststoff, z. B. Braunkohle, in einem Wirbelschichtkessel unter Zuführung von Luft, verbrannt. Die gasförmigen Medien dienen normalerweise zugleich als Fluidisierungsmittel.

Die Erfindung ist insbesondere anwendbar bei hochexpandierten und/oder zirkulierenden Wirbelschichten sowohl unter Atmosphärendruck als auch unter erhöhtem Druck. Die Grenzen zwischen den einzelnen Wirbelschichtzuständen sind fliessend. Eine Wirbelschicht, auch eine solche in hochexpandiertem Zustand, weist normalerweise eine zwar unregelmäßig ausgebildete und ggf. bezüglich ihrer Höhenlage sich verändernde, jedoch einigermaßen ausgeprägte obere Begrenzung auf, so daß die Dichte der Feststoffverteilung an der oberen Begrenzung der eigentlichen Wirbelschicht merklich abnimmt. Bei der zirkulierenden Wirbelschicht ist eine solche obere Begrenzung nicht mehr feststellbar. Diese Wirbelschicht weist normalerweise über die gesamte Höhe des Wirbelschichtreaktors eine von unten nach oben mehr oder weniger kontinuierlich abnehmende Dichte auf. Der Zustand einer Wirbelschicht hängt neben der Kornverteilung des Feststoffes und anderen Einflußgrößen insbesondere auch von der Geschwindigkeit ab, mit welcher die als Fluidisierungsmedium dienenden gasförmigen Medien von unten nach oben durch den Wirbelbettreaktor strömen. Mit zunehmender Geschwindigkeit verschiebt sich der Zustand der Wirbelschicht in Richtung auf die zirkulierende Wirbelschicht und bei noch höherer Geschwindigkeit bis zum Zustand eines Flugstromes.

Dies gilt unabhängig davon, unter welchem Druck, beispielsweise im Bereich zwischen 5 und 40 bar, vorzugsweise zwischen 20 und 30 bar, das Verfahren betrieben wird.

Beim Betrieb einer Wirbelschicht, und zwar auch bei einer solchen mit einer eindeutigen oberen Begrenzung, wird ein Teil des Feststoffes von den die Wirbelschicht von unten nach oben durchströmenden Gasen mitgerissen und zunächst in den oberhalb der Wirbelschicht befindlichen Raum innerhalb des Reaktors und von dort mit den Gasen aus dem Reaktor ausgetragen. Bei ansonsten gleichbleibenden Bedingungen wird der Anteil der aus der Wirbelschicht nach oben ausgetragenen Feststoffteilchen mit zunehmender Geschwindigkeit der gasförmigen Medien größer, bis bei der zirkulierenden Wirbelschicht der größte Teil des nicht umgewandelten Feststoffes mit den gasförmigen Medien oben aus dem Reaktor ausgetragen wird. Zur Erzielung einer ausreichenden Umwandlung ist die Verweilzeit des Feststoffes im Reaktor von Bedeutung und deshalb ist es im allgemeinen erforderlich, die mit den gasförmigen Medien ausgetragenen Feststoffteilchen wieder in den Reaktor und die darin befindliche Wirbelschicht zurückzuführen. Dies geschieht beispielsweise beim Vergasen oder Verbrennen von kohlenstoffhaltigen Teilchen solange, bis das einzelne Korn nur noch oder ganz überwiegend aus Asche besteht. Diese festen Rückstände werden im allgemeinen unten aus dem Reaktor ausgetragen.

Bei der Rückführung der Feststoffe ergeben sich Schwierigkeiten dadurch, daß in dem Gesamtsystem, welches im wesentlichen aus dem eigentlichen Wirbelschichtreaktor, einer Leitung, durch die die gasförmigen Medien mit den von ihnen mitgerissenen Feststoffpartikeln aus dem Reaktor herausgeführt werden, wenigstens einem im allgemeinen als Zyklon ausgebildeten Abscheider und der Rückführeinrichtung besteht, ein Druckgefälle vorhanden ist derart, daß der Druck innerhalb des Reaktors von unten nach oben, also in Richtung der strömenden Gase, abnimmt. Ein weiteres Druckgefälle bildet sich innerhalb des Abscheiders aus, wobei der Druck im Abscheider in dem Bereich, an den sich die Rückführeinrichtung für den abgeschiedenen Feststoff anschließt, noch einmal tiefer liegt als der Druck im oberen Bereich des Reaktors. Andererseits steht an dem dem Abscheider abgekehrten Ende der Rückführeinrichtung, an welcher letzterer in den unteren Bereich des Reaktors mündet, der dort herrschende Druck an der Rückführeinrichtung an, so daß an beiden Enden der Rückführeinrichtung unterschiedliche Drücke wirksam sind, wobei die beiden Bereiche unterschiedlichen Drucks durch den in der Rückführeinrichtung sich sammelnden, in den Reaktor zurückzuführenden Feststoff mehr oder weniger wirksam gegeneinander abgeschirmt sind. Diese Eigenart der Anordnung hat zur Folge, daß in der Rückführleitung der Feststoff von oben nach unten der Schwerkraft folgend sich bewegt, das Gas dagegen dem Druckgradienten folgend von unten nach oben strömt. Einer derart gegenläufigen Bewegung sind aber enge Grenzen gesetzt. In der Praxis entstehen dann unübersichtliche und nicht definierbare Betriebsverhältnisse innerhalb der Rückführeinrichtung, die dazu führen, daß das Zurückfließen des im Abscheider abgetrennten Feststoffes in den Reaktor verhindert, zumindest jedoch beeinträchtigt wird. Es kann dadurch schließlich zu einer Verstopfung der Rückführeinrichtung kommen, da sich die darin befindlichen Feststoffpartikeln in ihr festsetzen. Hinzu kommt, daß aufgrund des geschilderten Betriebszustandes unkontrollierbare und nicht beeinflußbare Druckausgleich-Vorgänge stattfinden, die ebenfalls zu Betriebsstörungen führen, ggf. sogar die Abscheideleistung des Abscheiders beeinträchtigen können.

Die Gefahr, daß der in der Rückführleitung befindliche Feststoff sich darin festsetzt mit dem Ergebnis, daß nach kurzer Zeit der in der Rückführleitung sich stauende Feststoff den Abscheider erreicht, ist insbesondere darauf zurückzuführen, daß die Rückführleitung einen kleinen Durchmesser im Verhältnis zu ihrer Länge aufweist. Die Länge wird im allgemeinen bestimmt sein durch die zwischen Abscheider und den Bereich des Wirbelschichtreaktors, in den hinein der rückzuführende Feststoff gebracht werden soll, zu überbrückende Entfernung. Eine Vergrößerung des Durchmessers der Rückführleitung, die der Gefahr des Auftretens von Verstopfungen entgegenwirken würde, scheidet aus, da dadurch die Druck- und Strömungsverhältnisse in der Gesamteinrichtung in unerwünschter Weise beeinflußt würden, und zwar ggf. bis zu einem Punkt, an welchem das System nicht mehr arbeitet. Eine Vergrößerung des Durchmessers der Rückführleitung, die, wie bereits erwähnt, im allgemeinen im unteren Bereich des Reaktors in diesen einmündet, würde - bei gegebenem Reaktor-Durchmesser - dazu führen, daß ein größerer Anteil des gasförmigen Wirbelmediums, ggf. mit Feststoffteilen, in den unteren Bereich der Rückführleitung eintritt, so daß die Strömungsverhältnisse, die eine Strömungsrichtung im Reaktor von unten nach oben, von dort in die Verbindungsleitung zum Abscheider und von dort über die Rückführeinrichtung zurück in den unteren Bereich des Reaktors bewirken sollen, mit zunehmendem Durchmesser der Rückführleitung ggf. eine Umkehrung, jedenfalls eine Beeinflussung erführen, die einen geordneten Betrieb aussch lössen. D. h., daß die Rückführleitung der Rückführeinrichtung in Anbetracht der vorbeschriebenen Gegebenheiten einen kleinen Durchmesser mit einem entsprechend hohen Strömungswiderstand aufweisen muß, um als eine Art Drossel zu wirken, die verhindert, daß ein Druckausgleich zwischen unterem Teil des Reaktors und Abscheider dadurch stattfindet, daß ein unzuträglich hoher Mengenstrom an Gas die Rückführleitung aufwärts strömt.

In der WO 8 603 986 sind ein Verfahren und eine Einrichtung zum Abtrennen von Feststoffpartikeln aus Rauchgasen eines mit einem zirkulierenden Wirbelbett betriebenen Reaktors beschrieben. Dabei wird ein Teil der Feststoffe mit dem Rauchgas aus dem Reaktor ausgetragen und zumindest teilweise in einem als Zyklon ausgebildeten Abscheider abgetrennt und über eine Rückführeinrichtung in den unteren Teil des Reaktors zurückgeführt. Zum Zwecke der Verbesserung der Abtrennung des Feststoffes aus dem Rauchgas im Zyklon wird vorgeschlagen, an der Austrittsöffnung des Zyklons für die aus dem Rauchgas abgetrennten Feststoffpartikel Unterdruck anzulegen. Zu diesem Zweck ist zwischen dem unteren Teil des Zyklons und der Rückführeinrichtung für die Feststoffpartikel eine Saugkammer angeordnet. Die so bewirkte Druckabsenkung am Ausgang des Zyklons führt dazu, daß in der Rückführeinrichtung das Entstehen eines Gasstromes bewirkt wird, der der Richtung, in welcher die im Zyklon abgeschiedenen Feststoffpartikel zum Reaktor zurückgeführt werden sollen, entgegengerichtet ist. Dadurch wird eine geordnete Rückführung der Feststoffpartikel behindert, so daß im praktischen Betrieb Störungen durch Verstopfungen der Rückführeinrichtung unvermeidbar sind.

In der EP-A 0 161 970 werden ein Verfahren und eine Einrichtung zum Behandeln von Feststoff in einer zirkulierenden Wirbelschicht beschrieben. Dabei ist ebenfalls ein Abscheider in Form eines Zyklons vorgesehen, der die mit dem Gas aus dem Reaktor ausgetragenen Feststoffpartikel vom Gas abtrennt. Der Ausgang des Zyklons für die Feststoffpartikel ist über eine Rückführleitung mit einer Kammer verbunden, die in wenigstens zwei Teilkammern unterteilt ist, von denen wenigstens eine ein Wirbelbett enthält. Dieses Wirbelbett dient im wesentlichen dazu, die im Zyklon abgeschiedenen Feststoffpartikel zu klassieren, um bestimmte Korngrößenbereiche vor Rückführung in den Reaktor ggf. einer zusätzlichen Behandlung zu unterziehen. Die in die Rückführeinrichtung eingeschaltete, das wenigstens eine Wirbelbett enthaltende Kammer ist gegenüber dem Zyklon durch eine siphonartige Ausgestaltung der Verbindungsleitung abgeschirmt, so daß das in der Kammer befindliche wenigstens eine Wirbelbett auf die Ansammlung von Feststoff innerhalb der siphonartig ausgebildeten Verbindungsleitung ohne Einfluß bleibt. Auch bei dieser Ausführungsform sind Störungen bei der Rückführung der im Zyklon abgeschiedenen Feststoffpartikel unvermeidbar.

Die US-PS 3 840 353 offenbart ein Verfahren und eine Einrichtung zum Behandeln von körnigen Feststoffen in einer Wirbelschicht, wobei eine Rückführeinrichtung vorgesehen ist, in welcher sich der rückzuführende Feststoff in einem Bett sammelt, welches durch von außen zugeführtes Gas fluidisiert wird. Dabei ist auch die Möglichkeit vorgesehen, einen besonderen Behälter in der Rückführeinrichtung anzuordnen, der über eine syphonartige Verbindungsleitung mit dem Reaktor verbunden ist. Das in dieser Leitung befindliche Feststoffbett wird ebenfalls durch von außen zugeführtes Gas fluidisert. Bei diesem bekannten Verfahren treten ebenfalls die einleitend beschriebenen Probleme auf, insbesondere unkontrollierbare Druckschwankungen in der Rückführeinrichtung. Die US-PS 3,840,353 offenbart zwar auch die Möglichkeit, in der Rückführeinrichtung ein Ventil vorzusehen. Ein solches Ventil kann jedoch die vorbe schriebenen Schwierigkeiten nicht beseitigen oder auch nur verringern. Es bedeutet vielmehr eine Komplizierung der gesamten Einrichtung, die dann zudem störanfälliger wird.

Die DE-AS 1,017,314 offenbart ein Verfahren und eine Einrichtung zur Erzeugung von Brenngasen aus festen Brennstoffen unter Verwendung eines Wirbelbettreaktors, wobei ebenfalls die mit dem Gas aus dem Reaktor ausgetragenen Feststoffteilchen wieder rückgeführt werden, und zwar zusammen mit einem der Vergasungsmedien. Störungen durch Verstopfungen der Rückführleitung sind dabei unvermeidbar. Hinzu kommt, daß die durch das strömende Vergasungsmedium beschleunigt bewegten, rückzuführenden Feststoffteilchen im Leitungssystem einen erheblichen Verschleiß verursachen.

In Chem.-Ing.-Tech. 57 (1985) No. 5, Seite 455 ff. wird ein Vergleich hochexpandierter zirkulierender Wirbelschichten mit unterschiedlichen Gaszuführungen angestellt. Dabei wird auch erwähnt, daß zwischen dem Innenraum des Reaktors einerseits und der Rückführeinrichtung andererseits eine Druckdifferenz besteht, bei der unterstellt wird, daß sie von der Höhe des Feststoffbettes in der Rückführeinrichtung abhängt. Das einleitend beschriebene Problem der Schwierigkeiten bei der Rückführung der abgeschiedenen Feststoffe in den Reaktor hinein wird in der Vorveröffentlichung nicht erwähnt.

Der Erfindung liegt die Aufgabe zugrunde, Verfahren und Einrichtung der einleitend beschriebenen Art so abzuwandeln bzw. auszugestalten, daß die vorbeschriebenen Schwierigkeiten vermieden, zumindest soweit verringert werden, daß ein einwandfreier Betrieb gewährleistet ist. Insbesondere soll eine kontrollierte Rückführung der Feststoffe aus dem Abscheider in den Reaktor mit einfachen Mitteln bei unterschiedlichen Betriebszuständen zuverlässig und störungsfrei möglich sein, und zwar sowohl bei unter Normaldruck als auch bei unter Überdruck betriebenen Verfahren sowie bei niedrig- bis hochexpandierten und ggf. zirkulierenden Wirbelschichten.

Zur Lösung dieser Aufgabe schlägt die Erfindung vor, daß der Druck in der Rückführeinrichtung zwischen Abscheider bis zumindest zur oberen Begrenzung des im unteren Bereich der Rückführeinrichtung sich bildenden Bettes aus rückzuführendem Feststoff durch in einem Abstand vom Abscheider erfolgende Gasabsaugung regelbar auf ein Niveau abgesenkt wird, das gleich ist dem tiefsten Druck im Abscheider oder ggf. sogar tiefer liegt als dieser Druck.

Durch diese Verfahrensführung wird erreicht, daß in der Rückführeinrichtung zwischen Abscheider und Feststoffbett im wesentlichen der gleiche Druck herrscht und somit der aus dem Abscheider kommende Feststoff in diesem Bereich ungehindert in Richtung auf die Mündung der Rückführeinrichtung in den Reaktor, also im allgemeinen nach unten, sich bewegen kann, da in diesem Bereich keine die Bewegung der Feststoffteilchen hemmende, aufwärts gerichtete Gasströmung aufgrund eines entgegenwirkenden Druckgefälles vorhanden ist. Überdies wird normalerweise in diesem Bereich auch bei größeren rückzuführenden Feststoffmengen, wie sie bei der zirkulierenden Wirbelschicht gegeben sind, die Dichte der Feststoff-Gas-Suspension so gering sein, daß die Gefahr, daß die Feststoffteilchen sich unter Bildung eines Festbettes in der Leitung festsetzen, nicht besteht. Außerdem begünstigen die ggf. aus dem Abscheider in Richtung auf den Reaktor strömenden Gasmengen den Transport der aus dem Abscheider kommenden Feststoffteilchen in Richtung auf das sich im unteren Bereich der Rückführeinrichtung bildende Feststoffbett. Andererseits hat die Absaugung zum Zwecke der Druckabsenkung zur Folge, daß eine bestimmte Menge an Gas in kontrollierbarer Weise, nämlich in Abhängigkeit von dem durch die Gasabsaugung erzeugten Unterdruck, aus dem Reaktor in den unteren Bereich der Rückführeinrichtung, der normalerweise ebenfalls als ein Rohrabschnitt ausgebildet ist, eintritt und das darin befindliche Feststoffbett etwa nach Art eines Wirbelbettes auflockert, so daß der in diesem unteren Bereich der Rückführeinrichtung sich sammelnde Feststoff ohne Schwierigkeiten sich nach unten bewegt und aus dem unteren Bereich der Rückführeinrichtung in den Reaktor eingetragen werden kann. Die Gefahr, daß sich der Feststoff in der Rückführeinrichtung festsetzt, wird so vermieden, zumal es bei Anwendung der Lehre gemäß der Erfindung ohne weiteres möglich und auch vorteilhaft ist, den Bereich der Rückführeinrichtung, in welchem der Druck auf einem Niveau gehalten wird, das nicht höher liegt als im Abscheider, so nahe wie möglich an den Reaktor zu bringen, so daß demzufolge die Höhe des in der Rückführeinrichtung befindlichen Feststoffbettes so gering gehalten werden kann, daß ein Festsetzen des sich sammelnden Feststoffs in der Rückführeinrichtung in jedem Fall vermieden wird. Andererseits sollte das im unteren Bereich der Rückführeinrichtung sich bildende Feststoffbett, dessen obere Begrenzung etwa in dem Bereich liegt, in welchem das Gas abgesaugt wird, in Strömungsrichtung des Gases eine Länge aufweisen, die ausreicht, einen Strömungswiderstand zu bewirken, der einerseits einen unkontrollierten Druckausgleich in der Rückführeinrichtung zwischen dem Druckniveau im Abscheider und dem Druckniveau im Reaktor verhindert und andererseits aufgrund des durch den Absaugvorgang bewirkten Gasstroms aus dem Reaktor die Enstehung eines kontrollierten, vorzugsweise wenig expandierten Wirbelbetts im unteren Bereich der Rückführeinrichtung bewirkt, wodurch ein kontinuierliches und störungsfreies Rückführen des Feststoffes aus dem unteren Bereich der Rückführeinrichtung in den Reaktor gewährleistet ist.

Gemäß einem weiteren Vorschlag der Erfindung kann der abgetrennte Feststoff innerhalb der Rückführeinrichtung zunächst in einen Ausgleichsbehälter gebracht und das sich darin bildende Feststoffbett durch in den Behälter eingeführtes Gas fluidisiert werden, um so den Feststoff aus diesem Behälter in die Verbindungsleitung zwischen Behälter und Wirbelreaktor einzutragen, in welcher der Feststoff durch aus dem Reaktor strömende Gase fluidisiert wird, und der Bereich oberhalb des im Ausgleichsbehälter und in der Verbindungsleitung sich befindlichen Wirbelbetts durch Gasabsaugung auf ein Druckniveau gebracht wird, welches gleich ist dem tiefsten Druck im Abscheider oder ggf. sogar tiefer liegt als dieser Druck. Das in den Behälter eingeführte gasförmige Medium kann von außen zugeführt werden. Da dieses Medium mit dem abgesaugten Gas in den Reaktor gelangt, kann es zweckmäßig sein, als gasförmiges Medium ein Vergasungsmittel oder ein Gemisch von Vergasungsmitteln, ggf. mit inertem Gas, zu verwenden. Es ist aber auch möglich, ausschließlich inertes Gas zu verwenden, insbesondere dann, wenn verhindert werden soll, daß im Ausgleichsbehälter der darin befindliche Feststoff sich mit dem zum Zwecke der Fluidisierung zugeführten Gas umsetzt.

Eine andere Variante der Erfindung sieht vor, daß eine Teilmenge des im Abscheider abgetrennten Feststoffes mit dem abgezogenen Gas in einen innerhalb der Rückführeinrichtung befindlichen zweiten Abscheider geführt wird und die Gasabsaugung an der für den Gasaustritt aus diesem zweiten Abscheider vorgesehenen Stelle erfolgt und der im zweiten Abscheider abgetrennte Feststoff in die Verbindungsleitung zum Wirbelbettreaktor zurückgeführt wird. Hierbei stellt sich die obere Grenze des im unteren Bereich der Rückführeinrichtung befindlichen Feststoffbettes, welches durch die aus dem Reaktor in die Rückführeinrich tung strömenden Gase fluidisiert wird, innerhalb des im allgemeinen als Zyklon ausgebildeten zweiten Abscheiders ein.

Die Erfindung sieht ebenfalls die Möglichkeit vor, den Strömungswiderstand in der Saugleitung zu verändern mit der Folge, daß auch die zur Erzeugung des Unterdrucks erforderliche Druckdifferenz genau eingestellt werden kann. Dadurch besteht die Möglichkeit, den Betrieb des Reaktors zu steuern. Bei entsprechender Einstellung der Druckdifferenz wird die ganze Menge der in die Rückführleitung eintretenden Gase abgesaugt. Im Falle eines Verbrennungsprozesses kann beispielsweise der Druck an der Absaugstelle niedriger sein als der Druck, der im unteren Teil des Abscheiders herrscht. Dabei wird eine gegenüber dem Normalbetrieb größere Menge an Rauchgas aus dem Abscheider abgesaugt und in den Reaktor zurückgeblasen. Auf diese Weise ist die Aufrechterhaltung eines Ruhefeuers im Reaktor möglich. Ähnliche Betriebszustände können bei Vergasungsprozessen eingestellt werden. In jedem Fall besteht die Möglichkeit, über den Absaugdruck Teillastzustände des Reaktors einzustellen.

Die Gasabsaugung zum Zwecke der Druckabsenkung in der Rückführeinrichtung wird in vorteilhafter Weise durch einen Injektor bewirkt, durch welchen zumindest ein Teil der gasförmigen Medien, die in den Wirbelbettreaktor eingeblasen werden, geführt wird. Die Verfahrensführung hat einmal den Vorteil, daß die Druckabsenkung unter Verwendung einfacher Mittel erfolgt, da es lediglich notwendig ist, wenigstens eine der Zuführleitungen für das gasförmige Medium in den Reaktor hinein mit einem Injektor zu versehen, der ein unkompliziertes, wenig störanfälliges Bauteil darstellt. Letzteres ist insbesondere deshalb wichtig, weil die über den Injektor aus der Rückführein richtung abgesaugten Gase, wenn auch nur in geringem Umfang, Feststoffpartikeln enthalten können, die bei einer komplizierteren Einrichtung zur Erzeugung des Unterdrucks, beispielsweise bei einem Gebläse, Störungen oder doch zumindest einen übermäßigen Verschleiß hervorrufen können. Hingegen ist ein ins Gewicht fallender Verschleiß bei einem Injektor wegen fehlender bewegter Teile nicht zu befürchten.

Neben der Möglichkeit der Einstellung des das Absaugen in der Rückführeinrichtung bewirkenden Unterdrucks durch Veränderungen des Strömungswiderstandes in der Saugleitung besteht auch die Möglichkeit einer Einstellung des Unterdrucks und damit des Reaktorbetriebs durch Zu- und Abschalten von einzelnen Injektoren bzw. durch Regelung der den Injektor durchströmenden Treibgasmenge. Die erstgenannte Lösung ist dann möglich, wenn, wie allgemein üblich, die für das Fluidisieren und für die Umsetzungen innerhalb der Anlage erforderlichen Medien über mehrere Zuleitungen und Düsen verteilt in den Reaktor eingeblasen werden.

In der Zeichnung sind einige Ausführungsbeispiele der Erfindung im Schema dargestellt. Es zeigen:

Fig. 1 eine Einrichtung zum Behandeln von körnigen Feststoffen in einer Wirbelschicht,
Fig. 2 eine zweite Ausführungsform einer solchen Einrichtung,
Fig. 3 eine dritte Ausführung einer solchen Einrichtung,
Fig. 4 die graphische Darstellung eines möglichen Druckverlaufs innerhalb der Einrichtung.

In einen Wirbelbettreaktor 20 wird beispielsweise über eine Schnecke 9 körniger Feststoff 10 zur Umwandlung eingetragen. Die Umwandlung erfolgt bei erhöhter Temperatur unter Verwendung von gasförmigen Medien 8, welche über einen Injektor 7 in den Reaktor 20 eingeblasen werden.

Abweichend von der Darstellung in der Zeichnung werden die gasförmigen Medien normalerweise über eine größere Anzahl von Düsen, die über den Umfang des Reaktors verteilt, ggf. auch in vertikalen Abständen voneinander angeordnet sind, in den Reaktor 20 eingeblasen. Eine oder mehrere dieser Düsen kann bzw. können als Injektor 7 ausgebildet sein.

Die Umwandlung der Feststoffe 10 erfolgt in einer sich im wesentlichen über die gesamte vertikale Länge des Reaktors 20 erstreckenden hochexpandierten Wirbelschicht oder in einer zirkulierenden Wirbelschicht. Aus dem oberen Teil 19 des Reaktors 20 wird über eine Verbindungsleitung 22 ein Gemisch aus nicht umgesetzten sowie bei der Umwandlung entstandenen Gasen und Feststoffteilchen in einen Zyklonabscheider 14 geführt, in welchem die Feststoffteilchen aus den Gasen abgetrennt werden. Die gereinigten Gase werden über die Leitung 23 aus dem Abscheider 14 in nachgeschaltete Einrichtungen geführt.

Die abgetrennten Feststoffteilchen gelangen in den unteren Bereich des Abscheiders 14 und von dort in eine Rückführeinrichtung, die die Verbindung zwischen Abscheider 14 und Wirbelbettreaktor 20 herstellt.

Der feste Umwandlungsrückstand, im Falle des Vergasens von kohlenstoffhaltigen Teilchen, also beispielsweise der feste Verasungsrückstand, sinkt in den unteren Bereich 24 des Reaktors 20 und wird von dort über ein Austragsorgan 25, beispielsweise eine Schnecke, ausgetragen.

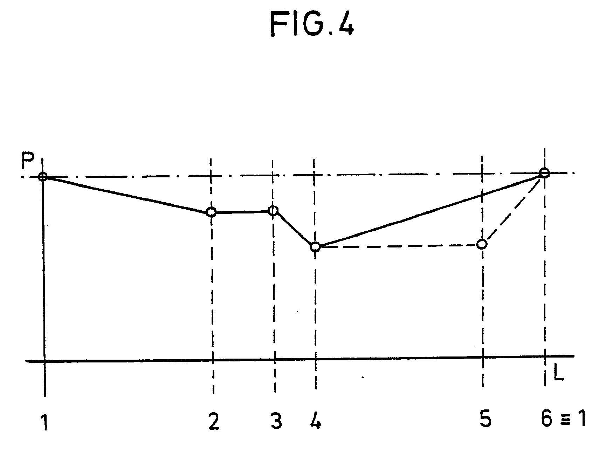

Gemäß der schematische Darstellung der Fig. 4 herrschen entlang der Strecke L, d. h. entlang des Weges, den die Feststoffteilchen innerhalb der Gesamteinrichtung, also dem Reaktor 20, der Leitung 22, dem Abscheider 14 und der Rückführeinrichtung 11 zurücklegen, unterschiedliche Drücke P. Im unteren Bereich 24 des Reaktors 20 herrscht der Druck 1. Im oberen Teil 19 im Bereich des Beginns der Leitung 22 herrscht der Druck 2, welcher geringfügig niedriger ist als der Druck 1 im unteren Bereich des Reaktors. In jenem Bereich, in welchem die Gase vermischt mit den mitgerissenen Feststoffteilchen in den Zyklonabscheider 14 eintreten, herrscht der Druck 3, der im wesentlichen gleich dem Druckniveau 2 im oberen Bereich 19 des Reaktors 20 ist. Innerhalb des Zyklonabscheiders 14 werden Gase und Feststoffteilchen nach unten geführt, wobei sich unter Druckabsenkung auf das Niveau 4 im unteren Bereich des Abscheiders 14 Gase 23 und Feststoffteilchen voneinander trennen. Im unteren Bereich des Abscheiders 14, also im Bereich des Druckniveaus 4 treten die Feststoffteilchen in die Rückführleitung 11 der Rückführeinrichtung ein. In letzterer steigt der Druck von oben nach unten auf das Niveau des Druckes 6 = 1 im unteren Bereich 24 des Reaktors 20. Diese bei bekannten Einrichtungen vorhandenen Druckverhältnisse P entsprechen bezüglich des grundsätzlichen Verlaufs, also bezüglich der Änderungen des Drucks, der ausgezogenen Linie 1 bis 6 in Fig. 4, wobei jedoch der Verlauf zwischen unterem Bereich des Abscheiders 14, also dem Druck 4 und der Mündung der Rückführleitung in den Reaktor 20 stark idealisiert dargestellt ist. In Wirklichkeit muß mit ständigen Druckschwankungen, verursacht durch Druckstöße oder dgl., gerechnet werden.

Erfindungsgemäß ist vorgesehen, auf der Oberseite 17 der Rückführleitung 11 der Rückführeinrichtung ein Anschlußstück 16 anzubringen, welches über eine Verbindungsleitung 12 mit der engsten Stelle des Injektors 7 verbunden ist.< Infolge der Strömung der gasförmigen Medien 8 durch den Injektor 7 stellt sich aufgrund der üblichen Injekt-rwirkung in der Verbindungsleitung 12 eine Druckdifferenz gegenüber dem Druck in der Rückführleitung 11 ein. Diese Druckdifferenz bewirkt, daß die in die reaktorseitige Mündung der Rückführleitung 11 eingeströmten Gase 26 und die in den Eingang 31 der Rückführleitung 11 aus dem Zyklonabscheider 14 eingeströmten Gase 32, welche eine Teilmenge der in den Abscheider 14 eingetretenen Gase darstellen, am Anschlußstück 16 abgesaugt und über den Injektor 7 wieder in den Reaktor 20 zurückgeführt werden. Im Bereich des Anschlußstückes 16 stellt sich ein Druckniveau 5 ein, das zumindest annähernd gleich dem Druckniveau 4 am unteren Ausgang des Zyklonabscheiders 14 ist und dessen genaue Höhe von der Wirkung des Injektors 7 abhängig ist. An der Mündung der Rückführleitung 11 in den Reaktor 20 herrscht das Druckniveau 6. Der Druckverlauf entspricht dem im rechten Teil der Fig. 4 mit unterbrochenen Strichen dargestellten Linienzug 4-5-6 . Dabei findet die entlang der Rückführeinrichtung zum Rücktransport der Feststoffteilchen in den Reaktor 20 erforderliche Druckänderung vom Niveau 4 auf das Niveau 6 nunmehr auf der kurzen Strecke zwischen dem Anschlußstück 16 mit dem Druckniveau 5 und der Mündung der Rückführleitung 11 im Reaktor 20 mit dem Druckniveau 6 statt. Das im Bereich dieser Strecke sich bildende, durch die Gase 26 fluidisierte Feststoffbett pegelt sich dabei im Bereich des Anschlußstücks 16 in der Rückführeinrichtung auf dem Niveau 33 ein. Unabhängig von der Menge des aus dem Abscheider 14 zufließenden Feststoffs bleibt das Niveau 33 im wesentlichen unverändert. Der Rückfluß des Feststoffs in den Reaktor 20 wird nicht behindert. Die bei bekannten Einrichtungen auftretenden unkontrollierten Druckstöße mit ihren Folgen, das sogenannte Slugging, bleiben aus.

Zum Ableiten der im Reaktor 20 bei der Umwandlung von Feststoff 10 entstehenden Wärme sind Wärmetauscherflächen 21 im oberen Teil 19 des Reaktors 20 vorgesehen. In dem diese Wärmetauscherflächen tragenden Wärmetauscher wird beispielsweise Dampf erzeugt.

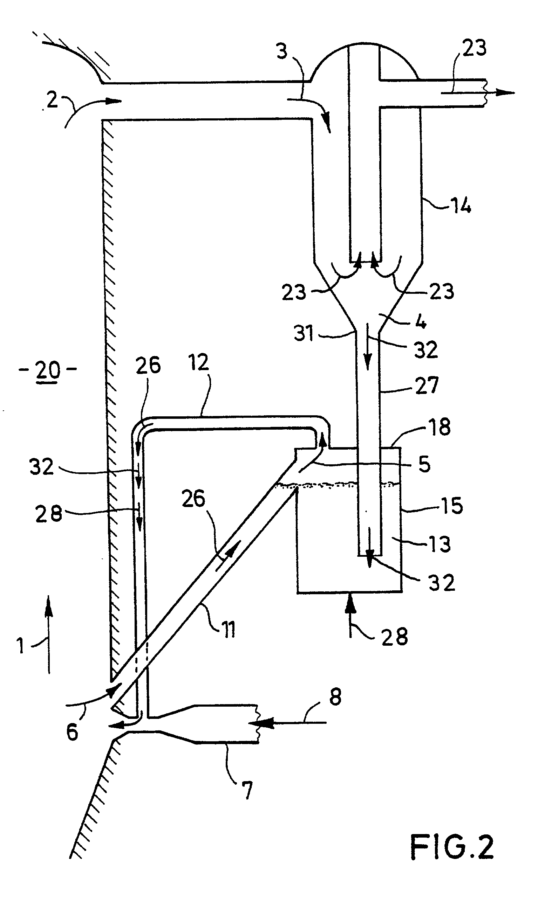

In einer abgewandelten Ausführungsform der Erfindung gemäß Fig. 2 ist die Rückführeinrichtung mit einem Ausgleichsbehälter 15 versehen, in welchen ein Fallrohr 27 mündet, dessen oberes Ende mit dem unteren Ausgang 31 des Zyklonabscheiders 14 verbunden ist. Der im Abscheider 14 abgeschiedene Feststoff 13 sammelt sich im Ausgleichsbehälter 15, in welchen von unten über einen Anschluß Gas 28 eingeführt wird, so daß der im Ausgleichsbehälter 15 befindliche Feststoff eine gewisse Fluidisierung erfährt.

Bei dieser Ausführungsform verbindet die Rückführleitung 11 den Ausgleichsbehälter 15 mit dem Reaktor 20. Gemäß der Darstellung der Fig. 2 geht die Rückführleitung 11 vom oberen Bereich des Ausgleichsbehälter 15 aus, so daß der in letzterem befindliche fluidisierte Feststoff 13 aus dem Ausgleichsbehälter 15 in die Rückführleitung 11 übertreten kann.

An der Oberseite des Ausgleichsbehälters 15 ist eine Leitung 12 vorgesehen, die den Innenraum des Ausgleichsbehälters 15 mit dem Injektor 7 vebindet, so daß die aus dem Reaktor 20 in die Rückführleitung 11 strömenden Gase 26 über die Rückführleitung 11 und den Ausgleichsbehälter 15 abgesaugt und in den Injektor 7 zurückgeführt werden. Dadurch stellt sich im oberen Teil des Ausgleichsbehälters 5 das Druckniveau 5 ein. Die über die Verbindungsleitung 12 abgesaugten Gase 26, 32 und 28 werden zusammen mit dem gasförmigen Medium 8 durch den Injektor 7 in den Reaktor 20 zurückgeführt.

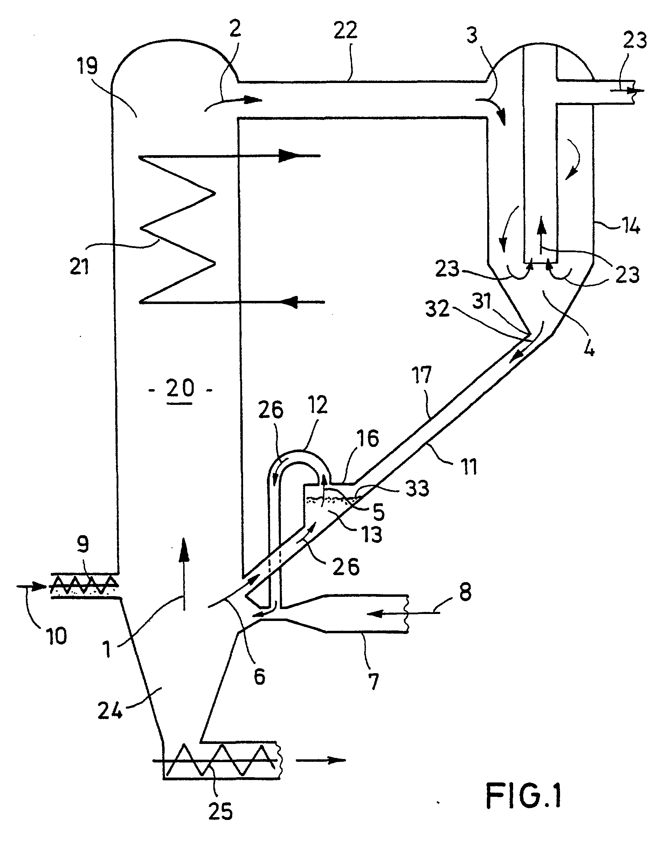

Auch bei dieser den Ausgleichsbehälter 15 aufweisenden Ausführungsform stellt sich ein Druckniveau 5 ein, welches der Darstellung gemäß Fig. 4 entspricht. Der Unterschied gegenüber dem Druckverlauf gemäß Fig. 4 liegt im wesentlichen in der Entfernung zwischen den Punkten 4 und 5 auf der Abszisse, welche die Länge L des Weges zwischen dem Bereich mit dem Druckniveau 1 und dem Bereich mit dem Druckniveau 6 veranschaulicht. Im Vergleich mit der Einrichtung gemäß Fig. 1 stellt sich bei der Einrichtung gemäß Fig. 2 das Druckniveau 5 in kürzerer Entfernung hinter dem Druckniveau 4 ein.

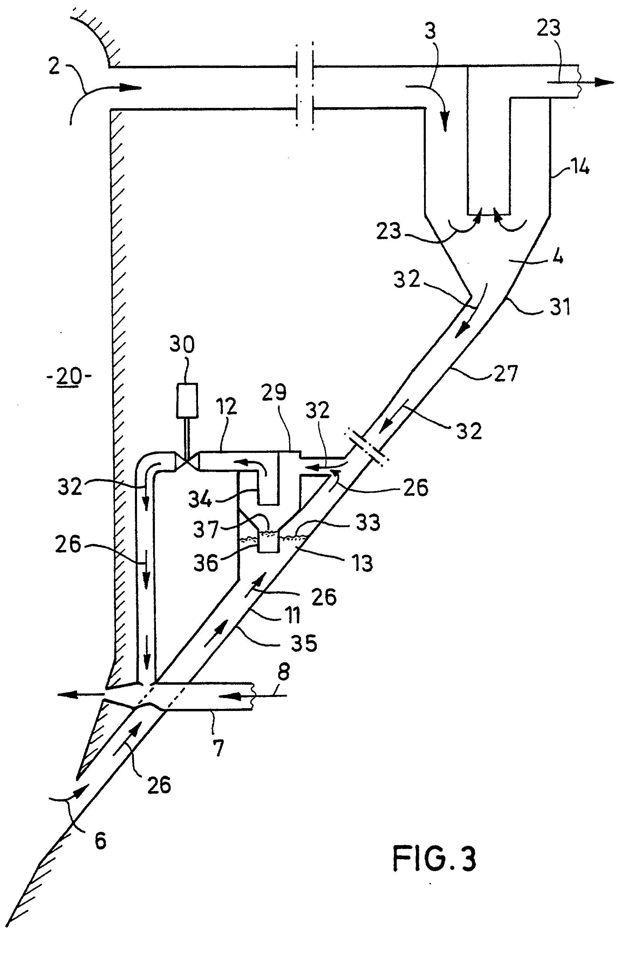

In einer weiteren Abwandlung der Erfindung gemäß Fig. 3 ist im unteren Teil 35 der Rückführeinrichtung ein zweiter Abscheider 29 angeordnet, dessen Tauchrohr 34 über die Leitung 12 mit dem Injektor 7 verbunden ist. Der Feststoff 13 pegelt sich innerhalb des Abscheiders 29 auf dem Niveau 33 und innerhalb des Auslauftrichters auf dem Niveau 37 ein. Über ein Einstellorgan 30, beispielsweise eine verstellbare Drossel, kann der Saugdruck in der Leitung 12 und damit im zweiten Abscheider 29 mit großer Genauigkeit eingestellt werden.

Unter der Wirkung des vom Injektor 7 erzeugten Saugdrucks treten die aus dem Reaktor 20 in der Rückführleitung 11 aufwärtsströmenden Gase 26 und die von oben aus dem ersten Abscheider 14 in Richtung auf den zweiten Abscheider 29 zusammen mit dem abgeschiedenen Feststoff 13 austretenden Gase in das Tauchrohr 34 ein, aus welchem sie in die Leitung 12 abgesaugt werden. Wie in den beiden vorbeschriebenen Ausführungsbeispielen werden die vom Injektor 7 abgesaugten Gase in den Reaktor 20 zurückgeleitet.

In Abhängigkeit von der Einstellung des Drosselorgans 30 und damit des in der Leitung 12 wirksamen Unterdrucks werden unterschiedlich große Gasmengen 26 und 32 aus der Rückführleitung 11 abgesaugt. Das Niveau 33 des Feststoffbettes 13 ändert sich bei unterschiedlichem Absaugdruck nur unwesentlich. Die Menge der abgesaugten Gase 26 und 32 ist ein Indikator für den Betriebszustand des Reaktors 20. Wenn dieser der Verbrennung von Feststoff dient, wird beispielsweise im Teillastbetrieb eine größere Menge 32 der entstehenden Rauchgase 23 abgesaugt, im Vergleich zu welcher die aus dem Reaktor 20 abgesaugte Menge an Verbrennungsgasen 26 geringer ist.

Die Anordnung eines zweiten Zyklonabscheiders 29 in der Rückführeinrichtung eignet sich besonders zur staubarmen Absaugung bei gleichzeitig erleichterter Steuerung des Betriebszustandes. Eine weitere Verbesserung der Rückführung von abgetrenntem Feststoff 13 kann dadurch erreicht werden, daß der Querschnitt des unteren Teiles 35 der Rückführleitung 11 vergrößert wird. Das Niveau 33 des Bettes aus abgeschiedenem Feststoff 13 ändert sich dadurch nicht.

Das auf der Ordinate der Fig. 4 dargestellte Druckniveau P gibt die tatsächlichen Verhältnisse nur bezüglich der Richtung der jeweiligen Druckänderung wieder. Die tatsächlich meßbaren Druckunterschiede sind im allgemeinen gering. Sie mögen in der Größenordnung zwischen 0,1 und 1 bar liegen.

**Patentansprüche**

1. Verfahren zur Behandlung von körnigen Feststoffen in einem Wirbelbett, bei dem die Feststoffe in einen Wirbelbettreaktor eingetragen und darin unter Wirkung von gasförmigen Medien unter zumindest Atmosphärendruck in einer Wirbelschicht behandelt werden und zumindest ein Teil der Feststoffe mit den gasförmigen Medien aus dem Wirbelbettreaktor herausgeführt und zumindest teilweise in einem Abscheider abgetrennt und über eine diesen mit dem Wirbelbettreaktor verbindende Rückführeinrichtung in den Wirbelbettreaktor zurückgeführt wird, wobei der abgetrennte Feststoff innerhalb der Rückführeinrichtung, die mit einer Verbindungsleitung für die Rückführung des abgetrennten Feststoffes versehen ist, in einem Feststoffbett gesammelt wird, welches seinerseits unter der Einwirkung gasförmiger Medien zumindest teilweise fluidisiert wird, und wobei ferner innerhalb der den Wirbelbettreaktor, den Abscheider und die Rückführeinrichtung aufweisenden Gesamteinrichtung ein Druckgefälle derart vorhanden ist, daß der Druck innerhalb des Abscheiders tiefer liegt als der Druck in dem Bereich des Wirbelbettreaktors, in welchem der im Abscheider abgetrennte und zurückgeführte Feststoff wieder in den Wirbelbettreaktor gelangt, dadurch gekennzeichnet, daß der Druck in der Rückführeinrichtung zwischen Abscheider und oberer Begrenzung des in der Rückführeinrichtung sich bildenden Feststoffbetts durch in einem räumlichen Abstand vom Abscheider erfolgende Gasabsaugung auf ein Niveau abgesenkt wird, das gleich ist dem tiefsten Druck im Abscheider oder tiefer liegt als dieser Druck.

2. Verfahren nach Anspruch 1, dadurch gekennzeichnet, daß der abgetrennte Feststoff innerhalb der Rückführeinrichtung zunächst in einen Ausgleichsbehälter eingeführt wird und das sich darin bildende Feststoffbett durch in den Behälter eingeführte gasförmige Medien fluidisiert wird, um so den Feststoff aus diesem Behälter in die Verbindungsleitung zwischen Behälter und Wirbelbettreaktor einzutragen, in welcher der Feststoff durch aus dem Reaktor strömende Gase fluidisiert wird, und der Bereich oberhalb des im Ausgleichsbehälter und in der Verbindungsleitung sich befindlichen Wirbelbettes durch Gasabsaugung auf ein Druckniveau gebracht wird, welches gleich ist dem tiefsten Druck im Abscheider oder tiefer liegt als diesr Druck.

3. Verfahren nach Anspruch 2, dadurch gekennzeichnet, daß das in den Behälter eingeführte gasförmige Medium von außerhalb der Gesamteinrichtung zugeführt wird.

4. Verfahren nach Anspruch 1, dadurch gekennzeichnet, daß das von außen in den Ausgleichsbehälter zuführte gasförmige Medium an der Umsetzung des Feststoffes im Reaktor teilnimmt.

5. Verfahren nach Anspruch 1, dadurch gekennzeichnet, daß der im Abscheider abgetrennte Feststoff in einen innerhalb der Rückführeinrichtung befindlichen zweiten Abscheider geführt wird und die Gasabsaugung an der für den Gasaustritt aus diesem zweiten Abscheider vorgesehenen Stelle erfolgt und der im zweiten Abscheider abgetrennte Feststoff in die Verbindungsleitung zum Wirbelbettreaktor geführt wird.

6. Verfahren nach Anspruch 1, dadurch gekennzeichnet, daß das aus der Rückführeinrichtung abgesaugte Gas in den Wirbelbettreaktor eingeblasen wird.

7. Verfahren nach Anspruch 6, dadurch gekennzeichnet, daß die Gasabsaugung zum Zwecke der Druckabsenkung in der Rückführeinrichtung durch einen Injektor bewirkt wird, durch welchen zumindest ein Teil der gasförmigen Medien, die in den Wirbelbettreaktor eingeblasen werden, geführt wird.

8. Einrichtung zur Behandlung von körnigen Feststoffen unter der Einwirkung von gasförmigen Medien in einer Wirbelschicht mit einem Wirbelschichtreaktor, einem Abscheider zum Abtrennen von Feststoffteilchen aus dem den Wirbelschichtreaktor verlassenden Gas-Feststoff-Gemisch und einer eine Verbindungsleitung zum Reaktor aufweisende Rückführeinrichtung, welche einen vertikalen Abstand überbrückt und den Abscheider mit dem Wirbelbettreaktor verbindet, dadurch gekennzeichnet, daß die Rückführeinrichtung in einem räumlichen Abstand vom Abscheider in dem Bereich, in welchem sich die obere Begrenzung ces in der Rückführeinrichtung sich bildenden Feststoffbettes aus den im Abscheider abgetrennten Feststoffteilchen bildet, über eine Saugleitung (12) an eine Unterdruckquelle (7) angeschlossen ist, um zumindest in dem oberhalb des Feststoffbettes befindlichen Bereich der Rückführeinrichtung ein Druckniveau zu erzeugen, welches mindestens so tief wie das tiefste Druckniveau im Abscheider (14) ist.

9. Einrichtung nach Anspruch 8, dadurch gekennzeichnet, daß die Saugleitung (12) an einen Injektor (7) angeschlossen ist, durch den zumindest ein Teil der in den Wirbelbettreaktor (20) einzuführenden gasförmigen Medien hindurchgeführt wird.

10. Einrichtung nach Anspruch 8, dadurch gekennzeichnet, daß die Rückführeinrichtung mit einem Ausgleichsbehälter (15) versehen ist, der über eine erste Leitung (27) mit dem Abscheider (14) und über eine Verbindungsleitung (11) mit dem Wirbelbettreaktor (20) verbunden und mit einer Zuführleitung (28) versehen ist, durch welche gasförmiges Medium in den Ausgleichsbehälter (15) eingeführt werden kann, um das darin befindliche Feststoffbett zu fluidisieren, und die Absaugleitung (12) im Bereich oberhalb des Feststoffbettes mit dem Ausgleichsbehälter (15) und der Verbindungsleitung (11) verbunden ist.

11. Einrichtung nach Anspruch 8, dadurch gekennzeichnet, daß die Rückführeinrichtung mit einem zweiten Abscheider (29) versehen ist, der über eine erste Leitung (27) mit dem in Strömungsrichtung hinter dem Reaktor (20) angeordneten Abscheider (14) und über die Verbindungsleitung (11) mit dem Wirbelbettreaktor (20) verbunden ist, wobei die Absaugleitung (12) mit einem Tauchrohr (34) im zweiten Abscheider (29) verbunden ist.

12. Einrichtung nach einem der vorhergehenden Ansprüche 8 bis 11, dadurch gekennzeichnet, daß in der Absaugleitung (12) ein einstellbares Drosselorgan (30) vorgesehen ist.

**Claims**

1. A process for the treatment of granular solid materials in a fluidised bed wherein the solid materials are introduced into a fluidised bed reactor and subjected therein to treatment under the effect of gaseous agents under at least atmospheric pressure in a fluidised layer and at least a part of the solid materials is taken out of the fluidised bed reactor with the gaseous agents and at least partially separated off in a separator and returned into the fluidised bed reactor by way of a recycling means connecting the separator to the fluidised bed reactor, wherein the solid material which is separated off is collected within the recycling means which is provided with a connecting conduit for recycling of the solid material which is separated off, in a solid material bed which in turn is at least partially fluidised under the effect of gaseous agents, and wherein moreover within the overall apparatus including the fluidised bed reactor, the separator and the recycling means there is a pressure drop such that the pressure within the separator is lower than the pressure in the region of the fluidised bed reactor in which the solid material which is separated off in the separator and recycled passes back into the fluidised bed reactor, characterised in that the pressure in the recycling means between the separator and the upper boundary of the solid material bed which is formed in the recycling means is reduced by gas suction removal which is effected at a spatial spacing from the separator, to a level which is equal to the lowest pressure in the separator or which is lower than said pressure.

2. A process according to claim 1 characterised in that the separated-off solid material within the recycling means is firstly introduced into a closed equalising container and the bed cf solid material which is formed therein is fluidised by gaseous agents introduced into the container in order thereby to transfer the solid material from said container into the connecting conduit between the container and the fluidised bed reactor, in which the solid material is fluidised by gases flowing out of the reactor, and the region above the fluidised bed in the equalising container and in the connecting conduit is adjusted by gas suction removal to a pressure level which is equal to the lowest pressure in the separator or which is lower than said pressure.

3. A process according to claim 2 characterised in that the gaseous agent introduced into the container is supplied from outside the overall apparatus.

4. A process according to claim 1 characterised in that the gaseous agent supplied to the equalising container from the outside participates in the reaction of the solid material in the reactor.

5. A process according to claim 1 characterised in that the solid material which is separated off in the separator is passed into a second separator disposed within the recycling means and the gas suction removal operation is effected at the location provided for the discharge of gas from the second separator and the solid material which is separated off in the second separator is passed into the connecting conduit to the fluidised bed reactor.

6. A process according to claim 1 characterised in that the gas which is sucked out of the recycling means is blown into the fluidised bed reactor.

7. A process according to claim 6 characterised in that the gas suction removal operation for the purposes of reducing the pressure in the recycling means is effected by an injector through which at least a portion of the gaseous agents which are introduced into the fluidised bed reactor is passed.

8. Apparatus for the treatment of granular solid materials under the effect of gaseous agents in a fluidised layer comprising a fluidised bed reactor, a separator for separating off particles of solid material from the gas-solids mixture leaving the fluidised bed reactor and a recycling means having a connecting conduit to the reactor and bridging over a vertical spacing and communicating the separator with the fluidised bed reactor, characterised in that at a spacial spacing from the separator in the region in which the upper boundary of the solid material bed which is formed in the recycling means is formed from the particles of solid material which are separated off in the separator, the recycling means is connected by way of a suction conduit (12) to a reduced pressure source (7) in order to produce a pressure level which is at least as low as the lowest pressure level in the separator (14), at least in the region of the recycling means which is above the solid material bed.

9. Apparatus according to claim 8 characterised in that the suction conduit (12) is connected to an injector (7) through which at least a portion of the gaseous agents to be introduced into the fluidised bed reactor (20) is passed.

10. Apparatus according to claim 8 characterised in that the recycling means is provided with an equalising container (15) which is connected to the separator (14) by way of a first conduit (27) and to the fluidised bed reactor (20) by way of a connecting conduit (11) and is provided with a feed conduit (28) for introducing gaseous agent into the equalising container (15) in order to fluidise the solid material bed disposed therein, and the suction conduit (12) communicates in the region above the solid material bed with the equalising container (15) and the connecting conduit (11).

11. Apparatus according to claim 8 characterised in that the recycling means is provided with a second separator (29) which is communicated by way of a first conduit (27) with the separator (14) which is arranged downstream of the reactor (20) in the direction of flow and with the fluidised bed reactor (20) by way of the connecting conduit (11), the suction conduit (12) communicating with a dip pipe (34) in the second separator (29).

12. Apparatus according to one of preceding claims 8 to 11 characterised in that an adjustable throttle member (30) is provided in the suction conduit (12).

**Revendications**

1. Procédé pour traiter des particules de matières solides dans un lit fluidisé, consistant à introduire ces matières dans un réacteur à lit fluidisé pour les soumettre à l'effet d'agents gazeux dans une couche fluidisée à une pression au moins égale à la pression atmosphérique, et à extraire du réacteur à lit fluidisé au moins une partie de ces matières solides avec les agents gazeux pour les séparer au moins en partie dans un séparateur; après quoi, on renvoie ces matières dans le réacteur à lit fluidisé grâce à un système de recyclage qui relie le séparateur au réacteur à lit fluidisé, tandis que ce système de recyclage est pourvu d'une canalisation de liaison pour ce renvoi des matières solides recueillies dans la séparateur, et que ces matières solides à recycler se trouvent rassemblées dans le système de recyclage pour y former un lit au moins en partie fluidisé sous l'effet d'agents gazeux, une chute de pression étant en outre prévue à l'intérieur du réacteur à lit fluidisé, ainsi que dans le séparateur et dans l'ensemble du système de récupération pour que la pression qui existe dans le séparateur soit plus faible que la pression, existant dans la zone du réacteur à lit fluidisé, où retournent les matières recueillies dans le séparateur, caractérisé en ce qu'on abaisse la pression dans le système de recyclage, entre le séparateur et la limite supérieure du lit de matières solides formé dans le système de recyclage, en effectuant une aspiration de gaz à une certaine distance du séparateur, pour abaisser la pression à un niveau qui est égal ou inférieur à celui de la pression la plus basse qui existe dans le séparateur.

2. Procédé selon la revendication 1, caractérisé en ce qu'on introduit d'abord dans un récipient de compensation les matières solides provenant du séparateur et arrivant dans le système de recyclage, les matières solides formant ainsi dans le récipient de compensation un lit qui se trouve fluidisé par des agents gazeux introduits dans ce récipient, pour assurer l'extraction de ces matières hors du récipient et leur passage dans la canalisation de liaison prévue entre le récipient et le réacteur à lit fluidisé, les matières solides se trouvant fluidisées par un courant gazeux sortant du réacteur, tandis que la pression qui existe dans la zone située au-dessus du lit fluidisé présent dans le récipient de compensation et dans la canalisation de liaison se trouve, grâce à une aspiration de gaz, abaissée à un niveau égal ou inférieur à celui de la pression la plus faible qui existe dans le séparateur.

3. Procédé selon la revendication 2, caractérisé en ce que le courant gazeux introduit dans le récipient de compensation provient de l'extérieur de l'ensemble de l'installation.

4. Procédé selon la revendication 1, caractérisé en ce que l'agent gazeux introduit de l'extérieur dans le récipient de compensation participe à la transformation des matières solides.

5. Procédé selon le revendication 1, caractérisé en ce que les matières solides recueillies dans le séparateur sont envoyées dans un deuxième séparateur disposé dans le système de recyclage, tandis qu'on effectue l'aspiration de gaz à l'endroit prévu pour la sortie du gaz hors de ce deuxième séparateur, et qu'on envoie dans la canalisation de liaison allant au réacteur à lit fluidisé les matières solides recueillies dans le deuxième séparateur.

6. Procédé selon la revendication 1, caractérisé en ce qu'on injecte dans le réacteur à lit fluidisé le gaz aspiré hors du système de recyclage.

7. Procédé selon la revendication 6, caractérisé en ce qu'on effectue au moyen d'un injecteur l'aspiration de gaz réalisée pour abaisser la pression dans le système de recyclage, cet injecteur servant au passage d'au moins une partie des agents gazeux qui sont insufflés dans le réacteur à lit fluidisé.

8. Dispositif pour traiter des particules de matières solides dans un réacteur à lit fluidisé, au moyen d'agents gazeux mis en œuvre dans ce lit fluidisé, comportant un séparateur pour recueillir les particules de matières solides dans le mélange de gaz et de matières solides sortant du réacteur à lit fluidisé, et un système de recyclage pourvu d'une canalisation de liaison allant au réacteur, cette canalisation couvrant un certain écartement vertical, et reliant le séparateur au réacteur à lit fluidisé, caractérisé en ce que le système de recyclage est relié par une canalisation d'aspiration (12) à une source de dépression (7), à une certaine distance du séparateur, dans la zone où la limite supérieure du lit de matières solides qui se forme dans le système de recyclage est constituée par les particules de matières solides recueillies dans le séparateur, pour assurer, au moins dans la zone du système de recyclage située au-dessus du lit de particules de matières solides, un niveau de pression au moins aussi bas que le plus bas niveau de pression existant dans le séparateur (14).

9. Dispositif selon la revendication 8, caractérisé en ce que la canalisation d'aspiration (12) est reliée à un injecteur (7) par lequel on fait passer au moins une partie des agents gazeux à introduire dans le réacteur fluidisé (20).

10. Dispositif selon la revendication 8, caractérisé en ce que le système de recyclage comporte un récipient de compensation (15), qui est relié par une première canalisation (27) au séparateur (14) et par une canalisation de liaison (11) au réacteur à lit fluidisé (20), le système comportant en outre une canalisation d'alimentation (28) qui permet d'introduire un agent gazeux dans le récipient de compensation (15), pour fluidiser le lit de particules de matières solides qui s'y trouve, et la canalisation d'aspiration (12) étant reliée au récipient de compensation (15) et à la canalisation de liaison (11) dans la zone située au-dessus du lit de particules de matières solides.

11. Dispositif selon la revendication 8, caractérisé en ce que le système de recyclage comporte un deuxième séparateur (29), qui est relié par une première canalisation (27) au séparateur (14) situé en aval du réacteur (20) dans le sens de l'écoulement, le deuxième séparateur étant relié au réacteur à lit fluidisé (20) par la canalisation de liaison (11), et la canalisation d'aspiration (12) débouchant par un tube-plongeur (34) dans le deuxième séparateur (29).

12. Dispositif selon l'une des revendications 8 à 11, caractérisé en ce qu'un organe d'étranglement réglable (30) est prévu sur la canalisation d'aspiration (12).

EP 0 278 287 B1

FIG.1

FIG.2

FIG.3

# FIG.4